# EUROPEAN PATENT APPLICATION

(11) **EP 3 348 521 A1**
(43) Date of publication of application: **18.07.2018**
(21) Application number: 17305040.2
(22) Date of filing: 12.01.2017
(51) Int. Cl.: C02F 1/467, C02F 101/30, C02F 1/461, C02F 101/32, C02F 101/36, C02F 1/34, C02F 103/28, C02F 103/34

(54) **PROCESS OF ELECTROCHEMICAL OXIDATION**

(71) Applicant: Dymond Cleantech, 69006 Lyon (FR)
(72) Inventor: KIRAN, Raphael, 69004 Lyon (FR)
(74) Representative: Metivet, Adrien

(57) **Abstract**

The invention relates to a process of electrochemical oxidation of a pollutant in an aqueous electrolyte using a multiple-electrode setup comprising at least a working electrode and at least a counter electrode and applying at least one train of current pulse, said train of current pulse comprises n pulses, n being an integer superior or equal to 2, n being identical or different from one train of current pulse to another,
wherein:
- each train of current pulse comprises positive pulses and may optionally comprise one negative pulse,
- each positive pulse has a different amplitude and/or duration,
- each positive pulse is followed by an off period of time during which the setup is turned off.

## Description

The present invention is about electrochemical cleaning. In particular, the invention relates to a novel process for electrochemical cleaning of polluted water. This process consists in a specific signal applied to the electrodes in a multiple electrode setup.

Toxic and non-biodegradable organic pollutants, pathogens and micropollutants in drinking water pose serious health risks, making it an absolute necessity to develop innovative, efficient wastewater treatment techniques and better water management systems. Conventional water treatment processes, such as flocculation (coagulation) and chemical treatment (poly-aluminium chloride, ferric chloride, ferrous sulphate, etc.), produce large quantities of chemical waste products. Ion exchange, activated carbon adsorption and membrane filtration are expensive and require frequent replacement of filters and membranes. These techniques are, therefore, insufficiently adapted to meet the dramatic increase in demand for high-quality water for domestic and industrial purposes. In contrast, the electrochemical disinfection and treatment (electrochemical oxidation) of organic contaminated water has recently gained widespread interest.

The electrochemical oxidation employing conventional electrodes such as PbO2, Ti/PbO2, SnO2, etc. have low corrosion resistance and low physicochemical stability. Boron-doped diamond electrodes (BDD electrodes), is, currently, the focus of research and development of wastewater treatment because they have superior electroanalytical properties: an extremely wide potential window in aqueous electrolytes (> 3 V), corrosion resistance in aggressive media, morphological and structural stability at high electrical voltage, low adsorption, low base current and biocompatibility. BDD elecrodes are for instance described in Kiran et al. (Journal of the Electrochemical Society, 160 (2) H1-H7 (2013)).

During electrochemical cleaning, two types of phenomena are occurring: direct anodic oxidation, electrogeneration of active species such as OH* (Hydroxyl radical). OH* can also destroy the microbes. The formation OH* is explained by the following chemical equation (Nasr, B., Abdellatif, G., Cañizares, P., Sáez, C., Lobato, J., & Rodrigo, M. A. (2005), Environmental science & technology, 39(18), 7234-7239):

H₂O → OH* + H⁺ + e⁻

OH* generated are oxidants and they oxidize the organic molecule (R) to carbon dioxide and water.

OH* + R → mCO₂ + nH₂O + e⁻

Electrochemical (waste) water treatment technique has undergone rapid development. However, the power consumed for organic pollutant removal has to remain minimal in order to penetrate wide market range, where coagulation and flocculation is still used. Influence of various parameters such as current density, pH, temperature, electrode material and electrolyte affect the efficiency of electrochemical water treatment.

Electrochemical water treatment is usually performed by passing electric current through the water using suitable electrodes (Kraft, Alexander, Platinum metals review 52.3 (2008): 177-185). The electric current dissociates water and lead to the electrochemical production of disinfecting species, OH*, causing elimination of a broad-range of organic contaminants (Chaplin, Brian P., Environmental Science: Processes & Impacts 16.6 (2014): 1182-1203). SnO₂, Ti/SnO₂-Sb-Ce, PbO₂, Ce-PbO₂, boron doped diamond electrodes can be widely applied in water treatment by electrochemical oxidation processes (Lin, Hui, et al., Environmental science & technology, 47.22 (2013): 13039-13046). These electrodes possess superior qualities when considered to other common electrodes such as an inert surface with low adsorption properties, remarkable corrosion stability and an extremely wide potential window in aqueous medium, resulting in the electrochemical production of OH* in much larger extent (Kiran, Raphael, et al., Journal of The Electrochemical Society 160.1 (2013): H67-H73).

An example of organic pollutants that can be destroyed through electrochemical oxidation include: phenols, chlorophenols, nitrophenols, dyes, surfactants, oil, waste from pulp and paper industry, pathogens, pesticides, insecticides, herbicides, pharmaceutical wastes, micropollutants, etc.

However, high energy consumption of electrochemical oxidation limits its industrial application. As per the generally accepted mechanism, water is discharged by maintaining anode at potentials above 1.23 V v/s SHE (standard hydrogen electrode). A single current pulse of current density 20, 40, and 60 mA.cm-2 was applied for treating bio-refractory wastewater as described by Zhu et al (Zhu, Xiuping, Jinren Ni, and Peng Lai., Water Research, 43.17 (2009): 4347-4355).

Similar protocols (of application of single pulse) were used for electrochemical oxidation of textile dyes (4 to 50 mA.cm⁻²) (Tsantaki, Eleni, et al., Journal of hazardous materials 207 (2012): 91-96), pharmaceutical effluent (20 to 100 A.cm⁻²) (Urtiaga, A. M., et al., Desalination 331 (2013): 26-34), oil (1.4 - 1.54 V v/s SHE, current density of 50 mA.cm⁻²) (Chatzisymeon, E., et al., Journal of Hazardous Materials 167.1 (2009): 268-274, pesticide atrazine (mA.cm⁻²) (Malpass, G. R. P., et al., Journal of hazardous materials 137.1 (2006): 565-572). Other parameters influencing the oxidation efficiency were also reported in the literature, such as the influence of pH, electrolyte concentration or temperature (De Sucre, V. Smith, and A. P. Watkinson, The Canadian Journal of Chemical Engineering 59.1 (1981): 52-59; Saracco, Guido, et al., Electrochimica Acta 46.2 (2000): 373-380; Martinez-Huitle, Carlos A., and Sergio Ferro., Chemical Society Reviews 35.12 (2006): 1324-1340).

In contrast with the techniques reported in the prior art, influence of the pulsed current density on the efficiency of electrochemical oxidation has never been investigated. Pulsed electrochemical techniques have been used in electrodeposition, etching, neural stimulation and activation of the electrode (Ghaemi, M., and L. Binder, Journal of power sources 111.2 (2002): 248-254; Liu, Y., et al., Solid state communications 127.8 (2003): 583-588; Negi, Sandeep, et al., Journal of neuroscience methods 186.1 (2010): 8-17, Kiran, Raphael, et al., Journal of The Electrochemical Society 160.1 (2013): H67-H73).

In *Kiran etal.* the authors have demonstrated an electrochemical treatment technique where a train of short cathodic and anodic pulses were applied to clean fouled electrodes. This technique is to revive the lost electrochemical properties of a boron doped diamond electrode that has been fouled in organic media or aged in air. The duration of the aforementioned activation is very short (the order of milliseconds) and such a process is not capable of performing water treatment.

Therefore, there is a need for an electrochemical cleaning process that allows to perform water treatment while consuming less energy than the conventional electrochemical cleaning process.

The Applicant has developed a novel process, wherein the water treatment energy consumption is decreased by several folds. The process, object of this invention, is a novel, energy efficient electrochemical oxidation process of organic pollutants in aqueous media, based on application of at least one train of positive current pulses, optionally comprising at least one negative pulse, instead of applying a single pulse.

The applicant has surprisingly observed that the process of the invention allows to oxidise more pollutant or contaminant in water for a same amount of energy spent than a process where a single current pulse or alternate current pulse is applied. In the end, the process according to the invention allows to spend up to several times less energy for the same amount of contaminant oxidised.

The process of the invention presents the advantages of:
- producing few and even no chemical wastes;
- consuming less energy than usual electrochemical cleaning systems.

In one embodiment, the invention relates to a process of electrochemical oxidation of a pollutant in an aqueous electrolyte using a multiple-electrode setup comprising at least a working electrode and at least a counter electrode and applying at least one train of current pulse, said train of current pulse comprises n pulses, n being an integer superior or equal to 2, n being identical or different from one train of current pulse to another,
wherein:
- each train of current pulse comprises positive pulses and may optionally comprise at least one negative pulse,
- each positive pulse has a different amplitude and/or duration,
- each positive pulse is followed by an off period of time during which the setup is turned off.

When the process comprises more than one train of current pulse, the trains of current pulse are identical or different.

The is no limitation for the number of trains of current pulse, the skilled artisan will apply as many trains of current pulse that are necessary to oxidize the required amount of pollutant.

In one embodiment, the process comprises more than 2 trains of current pulse, preferably more than 500 and more preferably more than 1000.

In one embodiment, each off period of time during which the setup is turned off has a different duration.

In one embodiment, the at least one train of current pulse is either descending, ascending or unsorted train of current pulse wherein:
o in a descending train of current pulse, the amplitude of the positive pulses decreases from one pulse to another in function of time, the duration of the positive pulses decreases from one pulse to another in function of time and/or the duration of the off periods of time between two positive pulses decreases from one off period to another in function of time,
o in an ascending train of current pulse, the amplitude of the positive pulses increases from one pulse to another in function of time, the duration of the positive pulses increases from one pulse to another in function of time and/or the duration of the off periods of time between two positive pulses increases from one off period to another in function of time,
o in an unsorted train of current pulse, the amplitude of the positive pulses increases or decreases from one pulse to another in function of time, the duration of the positive pulses increases or decreases from one pulse to another in function of time and/or the duration of the off periods of time between two positive pulses increases or decreases from one off period to another in function of time.

In the context of the invention, a power supply can either be from a voltage source and/or a current source. The process of the invention comprises at least one train of current pulse. The skilled person would at ease understand how to reproduce the process of the invention with trains of voltage or potential pulses.

It is meant by "pulse", a short-term variation of a physical magnitude (voltage. current, etc.) with a return to the initial state. Within the scope of the invention, "pulse" refers to a short voltage or current variation for a total time from 100 milliseconds to 600 seconds, followed by a return to the initial state (usually with amplitude equal to zero) of the voltage or current value. The "amplitude" of a pulse refers to the maximum value of the anodic or cathodic current (or voltage) reached during an anodic or cathodic current (or voltage) pulse relative to a base line, usually equal to zero.

It is meant by "positive pulse", a pulse for which the amplitude relative to the base line increases and returns to the base line after a certain duration, from 100 milliseconds to 600 seconds. A "negative pulse" may be considered as being a wave for which the amplitude reduces relative to the base line and returns to the base line after a duration, from 100 milliseconds to 300 seconds.

It is meant by "aqueous electrolyte", an aqueous conducting solution. In one embodiment, the electrolyte is a salt, an acid or a base dissolved in the solution. In one embodiment, the electrolyte is the pollutant.

It is meant by "pollutant", an organic substance that is dissolved in or in mixture with the aqueous electrolyte. In an embodiment, the pollutant may further contain inorganic substance(s).

In the context of the invention, a pollutant is considered to be the molecule or compound that will be oxidised during the process of the invention.

An "unsorted train of current pulse" according to the invention can be understood as a random ascending or a random descending train of current pulse. It means that each single positive pulse of the random train of current pulse has a different amplitude and/or duration.

In one embodiment, in the at least one train of current pulse the amplitude of the positive pulses increases or decreases by 5 to 30 %, preferably by 5 to 20 % and more preferably by 5 to 15 % from one pulse to another in function of time.

In one embodiment, in the at least one train of current pulse the amplitude of the positive pulses increases or decreases by 10 % from one pulse to another in function of time.

In one embodiment, in the at least one train of current pulse the duration of the positive pulses increases or decreases by 5 to 30 %, preferably by 5 to 20 % and more preferably by 5 to 15 % from one pulse to another in function of time.

In one embodiment, in the at least one train of current pulse the duration of the positive pulses increases or decreases by 10 % from one pulse to another in function of time.

In one embodiment, in the at least one train of current pulse the duration of the off periods of time between two positive pulses increases or decreases by 5 to 30 %, preferably by 5 to 20 % and more preferably by 5 to 15 % from one off period to another in function of time.

In one embodiment, in the at least one train of current pulse the duration of the off periods of time between two positive pulses increases or decreases by 10 % from one off period to another in function of time.

In one embodiment, the duration of the first off period of time is comprised between 85 and 95 %, preferably 90 % of the duration of the first positive pulse of the at least one train of current pulse.

In one embodiment, each positive pulse of the at least one train of current pulse has an amplitude ≥ 0.1 mA.cm⁻².

In one embodiment, each positive pulse of the at least one train of current pulse has a amplitude ≥ 1 mA.cm⁻².

In one embodiment, each positive pulse of the at least one train of current pulse has a duration ≥ 100 ms.

In one embodiment, each positive pulse of the at least one train of current pulse has a duration ≥ 1 s.

In one embodiment, in the at least one train of current pulse, the amplitude of the first positive pulse is comprised between 1 and 50 mA.cm⁻², preferably between 5 and 25 mA.cm⁻² and more preferably between 10 and 20 mA.cm⁻² and the amplitude of pulses is defined such as the amplitude of a positive pulse m is equal to 70 to 95 % preferably 80 to 95 % and more preferably 85 to 95 % of the amplitude of a positive pulse m-1, m being an integer and 1 ≤ m ≤ n.

In one embodiment, in the at least one train of current pulse, the amplitude of the first positive pulse is comprised between 10 and 15 mA.cm⁻².

In one embodiment, in the at least one train of current pulse, the amplitude of the first positive pulse is 13.3 mA.cm⁻².

In one embodiment, in the at least one train of current pulse, the duration of the first positive pulse is comprised between 1 and 600 seconds, preferably between 2 and 20 seconds, more preferably between 3 and 10 seconds and the duration of positive pulses is defined such as the duration of a positive pulse m is equal to 70 to 95 % preferably 80 to 95 % and more preferably 85 to 95 % of the duration of a positive pulse m-1, m being an integer and 1 ≤ m ≤ n.

In one embodiment, wherein in the at least one train of current pulse, the duration of the first positive pulse is comprised between 3 and 8 seconds.

In one embodiment, wherein in the at least one train of current pulse, the duration of the first positive pulse is 6 seconds.

In one embodiment, in the at least one train of current pulse, the duration of the first off period of time is comprised between between 1 and 600 seconds, preferably between 2 and 20 seconds, more preferably between 3 and 10 seconds and the duration of the off periods of time is defined such as the duration of the off period of time p is equal to 70 to 95 % preferably 80 to 95 % and more preferably 85 to 95 % of the the off period of time p-1, p being an integer and 1 ≤ p ≤ n.

In one embodiment, in the at least one train of current pulse, the duration of the first off period of time is comprised between 3 and 8 seconds.

In one embodiment, in the at least one train of current pulse, the duration of the first off period of time is 6 seconds, preferably 5.4 seconds.

In one embodiment, in the at least one train of current pulse, the amplitude of the first positive pulse is comprised between 1 and 30 mA.cm⁻², preferably between 1 and 25 mA.cm⁻² and more preferably between 1 and 10 mA.cm⁻² and the amplitude of positive pulses is defined such as the amplitude of a positive pulse m-1 is equal to 70 to 95 % preferably 80 to 95 % and more preferably 85 to 95 % of the amplitude of a positive pulse m, m being an integer and 1 ≤ m ≤ n.

In one embodiment, in the at least one train of current pulse, the duration of the first positive pulse is comprised between 1 to 600 seconds, preferably between 1 and 20 seconds, more preferably between 31 and 10 seconds and the duration of positive pulses is defined such as the duration of a positive pulse m-1 is equal to 70 to 95 %, preferably 80 to 95 % and more preferably 85 to 95 % of the duration of a positive pulse m, m being an integer and 1 ≤ m ≤ n.

In one embodiment, in the at least one train of current pulse, the duration of the first off period of time is comprised between between 1 and 600 seconds, preferably between 1 and 20 seconds, more preferably between 1 and 10 seconds and the duration of the off periods of time is defined such as the duration of the off period of time p-1 is equal to 70 to 95 % preferably 80 to 95 % and more preferably 85 to 95 % of the off period of time p, p being an integer and 1 ≤ p ≤ n.

In one embodiment, the duration of each train of current pulse is comprised between 30 and 5000 seconds, preferably between 40 and 200 seconds and more preferably between 50 and 100 seconds.

In one embodiment, the duration of each train of current pulse is comprised between 50 and 80 seconds, prefereably 60 seconds.

In one embodiment, the total off period of time in the at least one train of current pulse is more than 1 % of the total duration of the at least one train of current pulse, preferably more than 10 % and more preferably more than 50 %.

In one embodiment, the sum of the durations of the pulses in the at least one train of current pulse is more than 99 % of the total duration of said train of current pulse, preferably more than 90 % and more preferably more than 50 %.

In one embodiment, the at least one negative pulse is the last pulse of the at least one train of current pulse.

In the process, according to the invention, the number of negative pulses is always smaller than the number of positive pulses. In a train of current pulse, the number of negative pulses is always smaller than the number of positive pulses.

In one embodiment, in each train of current pulse, the ratio: (number of negative pulses)/(number of positive pulses) is ≤ 0.5, preferably ≤ 0.3 and more preferably ≤ 0.15.

In one embodiment, each train of current pulse comprises a negative pulse, preferably the negative pulse is the last pulse of each train of current pulse.

In one embodiment, the amplitude of the negative pulse is comprised between 1 and 50 mA.cm⁻², preferably between 5 and 30 mA.cm⁻² and more preferably between 5 and 15 mA.cm⁻².

In one embodiment, the amplitude of the negative pulse is 10 mA.cm⁻².

In one embodiment, the duration of the negative pulse is comprised between 0.01 and 50 s, preferably between 0.1 and 10 sand more preferably between 0.02 and 1 s.

In one embodiment, the duration of the negative pulse is 0.5 s.

In one embodiment, the pulses shape is periodic or aperiodic, preferably periodic and of triangle, square, sinusoidal, saw tooth or wave shape and more preferably periodic and of square shape.

In one embodiment, the positive pulses shape is periodic or aperiodic, preferably periodic and of triangle, square, sinusoidal, saw tooth or wave shape and more preferably periodic and of square shape.

In one embodiment, the negative pulses shape is periodic or aperiodic, preferably periodic and of triangle, square, sinusoidal, saw tooth or wave shape and more preferably periodic and of square shape.

The positive pulses shape and the negative pulses shape is identical or different.

In one embodiment, the amplitude of the pulses in the at least one train of current pulse is comprised between 0.1 and 1000 mA.cm⁻², preferably between 1 and 100 mA.cm⁻², and more preferably between 5 and 50 mA.cm⁻².

In one embodiment, a train of voltage pulse is applied and the potential of the pulses in the at least one train of current pulse is comprised between 0.1 and 100 V, preferably between 0.5 and 50 V, and more preferably between 1 and 24 V.

All the embodiments described for the process comprising at least one train of current pulse are applicable to the process comprising at least one train of voltage pulse.

In one embodiment, the number n of pulses of the at least one train of current pulse is comprised between 2 and 10000, preferably between 2 and 1000, more preferably between 2 and 100 and in a favoured embodiment between 2 and 20.

In one embodiment, the number n of pulses of the at least one train of current pulse is comprised between 5 and 15, preferably between 5 and 10.

In one embodiment, wherein the number n of pulses of the at least one train of current pulse is 7.

In one embodiment, each train of current pulse consist in n-1 positive pulses, n-1 off periods of time during which the setup is turned off and one negative pulse, each positive pulse is followed by an off period of time and the negative pulse is the last pulse of each train of current pulse.

In one embodiment, each train of current pulse is a descending train of current pulse and each train of current pulse consist in n-1 positive pulses, n-1 off periods of time during which the setup is turned off and one negative pulse, each positive pulse is followed by an off period of time and the negative pulse is the last pulse of each train of current pulse.

In one embodiment, each train of current pulse is a descending train of current pulse and each train of current pulse consist in n-1 positive pulses, n-1 off periods of time during which the setup is turned off and one negative pulse, each positive pulse is followed by an off period of time, the negative pulse is the last pulse of each train of current pulse, n is comprised between 5 and 15 and the amplitude of the first pulse is comprised between 10 and 20 mA.cm⁻².

In one embodiment, the process comprises more than 10 trains of current pulse, preferably more than 100, each train of current pulse is a descending train of current pulse and each train of current pulse consist in n-1 positive pulses, n-1 off periods of time during which the setup is turned off and one negative pulse, each positive pulse is followed by an off period of time, the negative pulse is the last pulse of each train of current pulse, n is comprised between 5 and 15 and the amplitude of the first pulse is comprised between 10 and 20 mA.cm⁻².

In one embodiment, the process comprises more than 600 trains of current pulse, each train of current pulse is a descending train of current pulse and each train of current pulse consist in n-1 positive pulses, n-1 off periods of time during which the setup is turned off and one negative pulse, each positive pulse is followed by an off period of time and the negative pulse is the last pulse of each train of current pulse, n is between 5 and 10 and the amplitude of the first pulse is between 10 and 15 mA.cm⁻².

According to the invention, the setup is a multiple-electrode setup. When a multiple-electrode setup is used to oxidize the organic pollutant, there can be one or more working electrode and they can be current source through which current of same or different amplitude flows, there can be one or more than one counter electrode and they can be current sink through which current of same or different amplitude flows. Preferably, the setup used to oxidize organic impurities is a two-electrode setup (comprising a working and a counter electrode). The working electrode is the current source (organic pollutants are oxidized in the vicinity of the working electrode) and the counter electrode is the current sink.

In one embodiment, the setup used to oxidize organic impurities is a three-electrode setup (comprising a working, a counter and a reference electrode). The working electrode is the current source (organic pollutants are oxidized in the vicinity of the working electrode) and the counter electrode is the current sink and the reference electrode is held at constant potential.

In one embodiment, the working electrode is water treatment electrode material.

In one embodiment, the counter electrode is water treatment electrode material.

In one embodiment, the working electrode is chosen from the group comprising boron doped diamond, diamond like carbon, graphite, Ti, TiO₂, Pt, Pb, PbO₂, SnO₂, their alloys or combination of these materials electrodes.

In one embodiment, the counter electrode is chosen from the group comprising boron doped diamond, stainless steel, platinum, Ti, TiO₂, Au, their alloys or of combination of these materials electrodes.

In one embodiment, the reference electrode is a chosen from the group comprising standard hydrogen electrode, normal hydrogen electrode, reversible hydrogen electrode, saturated calomel electrode, copper-copper(II) sulphate electrode and silver chloride electrode.

In one embodiment, the working electrode is a boron doped diamond electrode and the counter electrode is chosen from the group consisting of stainless steel, platinum, Ti, TiO₂, Au, their alloys or of combination of these materials electrodes.

In one embodiment, the working electrode is chosen from the group consisting of diamond like carbon, graphite, Ti, TiO₂, Pt, Pb, PbO₂, SnO₂, their alloys or combination of these materials electrodes and the counter electrode is a boron doped diamond electrode.

In a preferred embodiment, the working electrode a boron doped diamond electrode and the counter electrode is a boron doped diamond electrode.

In one embodiment, the dimension of the electrodes is comprised between 0.01 and 100,000 cm², preferably between 1 and 1,000 cm² and more preferably between 1 and 500 cm².

In one embodiment, the dimension of the electrodes is comprised between 1 and 200 cm², preferably between 50 and 150 cm², more preferably between 80 and 120 and most preferably 100 cm².

Process according to any of preceeding claims, wherein the working and counter electrodes are separated by a distance of between 0.01 and 10,000 mm, preferably 0.1 and 100 mm and more preferably 0.5 and 10 mm.

In one embodiment, the working and counter electrodes are separated by a distance of between 1 and 8 mm, preferably 1 and 5 mm and more preferably 1 and 3 mm.

In one embodiment, the electrolyte is the pollutant.

In one embodiment, the pollutant is an organic molecule, preferably chosen in the group comprising phenols, chlorophenols, nitrophenols, dyes, surfactants, oil, waste from pulp and paper industry, pathogens, pesticides, insecticides, herbicides, pharmaceutical wastes, micropollutants.

In one embodiment, the invention relates to a clean water obtained according to the process of the invention,

In one embodiment, the clean water contains less than 20 % of pollutant compared to the water before being cleaned, preferably less than 10 %.

The invention also relates to the multiple electrode setup wherein the at least one train of current pulse is applied.

### Description of the figures

Figure 1 shows a typical descending pulse train that is applied to the working electrodes for the oxidation of organic pollutant, where J is the current density in mA.cm⁻², t is the time in seconds.
Figure 2 shows the concentration of ascorbic acid (AA) in mg versus charge (Q) in coulombs transferred to the working electrode during the oxidation process of example 3. The pulsed trial uses the pulsing conditions mentioned in example 2 and control uses single pulse for the entire operation.
Figures 3a and 3b represent the concentration of ascorbic acid (AA) in mg versus charge (Q) in coulombs transferred to the working electrode during the oxidation process of example 3 for both pulsed (3a) and control trials (3b) along with fitted curve.
Figure 4 represents the concentration of paracetamol in mg versus charge (Q) in coulombs transferred to the working electrode during the oxidation process of example 4. The pulsed trial uses the pulsing conditions mentioned in example 2 and control uses single pulse for the entire operation.
Figures 5a and 5b show the concentration of paracetamol in mg versus charge (Q) in coulombs transferred to the working electrode during the oxidation process of example 4 for both pulsed (5a) and control trials (5b) along with fitted curve.

The following examples illustrate, in a non-limitative way the invention.

### Example 1: Oxidation process

The electrochemical oxidations were conducted using an electrolytic flow cell under applying a train of current/voltage pulse. Distilled water containing organic compounds (ascorbic acid and paracetamol solutions) was circulated through the electrolytic cell by means of a pump working with a flow rate of 600 m³.h⁻¹. BDD, TiO₂ and stainless steel were used as working and counter electrodes. Both electrodes were of circular disks with area of 75 cm² and the distance between the cathode and anode is kept 1 mm.

A two-electrode setup consisting of the working electrode (BDD, TiO₂ or stainless steel) and counter electrode (BDD, TiO₂ or stainless steel) was employed for the electrochemical oxidation of organic compounds. In order to simulate organic pollutants, two organic compounds were used: ascorbic acid (AA) and paracetamol. Their solutions were prepared daily by dissolving 20 mg of respective compound in one litre of water.

The oxidation process consists of applying a sequence of trains of current pulse of finite amplitude for a finite duration on the working electrode.

A train of current pulse contains a positive pulse of amplitude 13.3 mA.cm⁻² and a duration of 6 seconds (s) and the system is turned off for 5.4 s, followed by a positive pulse of amplitude 12 mA.cm⁻² and a duration of 5.4 s and the system is turned off for 4.9 s, followed by a positive pulse of amplitude 10.8 mA.cm⁻² and a duration of 4.9 s and the system is turned off for 4.4 s, followed by a positive pulse of amplitude 9.7 mA.cm⁻² and a duration of 4.4 s and the system is turned off for 3.9 s, followed by a positive pulse of amplitude 8.7 mA.cm⁻² and a duration of 3.9 s and the system is turned off for 3.5 s, followed by a positive pulse of amplitude 7.9 mA.cm⁻² and a duration of 3.5 s and the system is turned off for 3.2 s, followed by a positive pulse of amplitude 7.1 mA.cm⁻² and a duration of 3.2 s and the system is turned off for 2.9 s, followed by a negative pulse of amplitude 10 mA.cm⁻² and a duration of 0.5 s.

The above train of current pulse is repeated 720 times.

The control of the experiment is the same system with application of a single current pulse of amplitude 13.3 mA.cm⁻² for a duration of 297 minutes, which corresponds to the same energy spent to oxidise 20 mg of organic compound dissolved in one litre of water. However, the pulsed cleaning and control experiment resulted in different yield as depicted in Table 1.

The oxidation process is paused for a duration of 5 minutes, at an interval when the total charged applied is 19.8 C.cm⁻², in order to measure the concentration of organic compound. The concentration of organic compound is measured according to cyclic voltammetry.

### Example 2: Determination of the concentration of pollutants

The concentration of organic compounds was quantified using cyclic voltammetry (CV) after each hour of electrochemical oxidation. A three-electrode setup consisting of BDD as the working electrode, platinum as the counter electrode and silver chloride as the reference electrode was employed for the CV characterization.

This standard procedure is described in Kim et al., Biosensors and Bioelectronics 25.10 (2010): 2366-2369 or Masawat, Prinya, et al., Talanta 58.6 (2002): 1221-1234.

Oxidation peaks were obtained from CV at scan rate = 200 mV.s⁻¹, where the working electrode was scanned from -0.5 V to 2 V vs AgCI.

### Example 3: Oxidation of ascorbic acid using BDD electrodes

20 mg of AA was dissolved in one litre of water and was circulated through the electrolytic cell with a flow rate of 600 m³ h⁻¹. BDD was used as working and counter electrodes for electrochemical oxidation of AA and a three-electrode setup (as mention in example 2) was used for quantifying AA.

The oxidation was performed according to example 1.

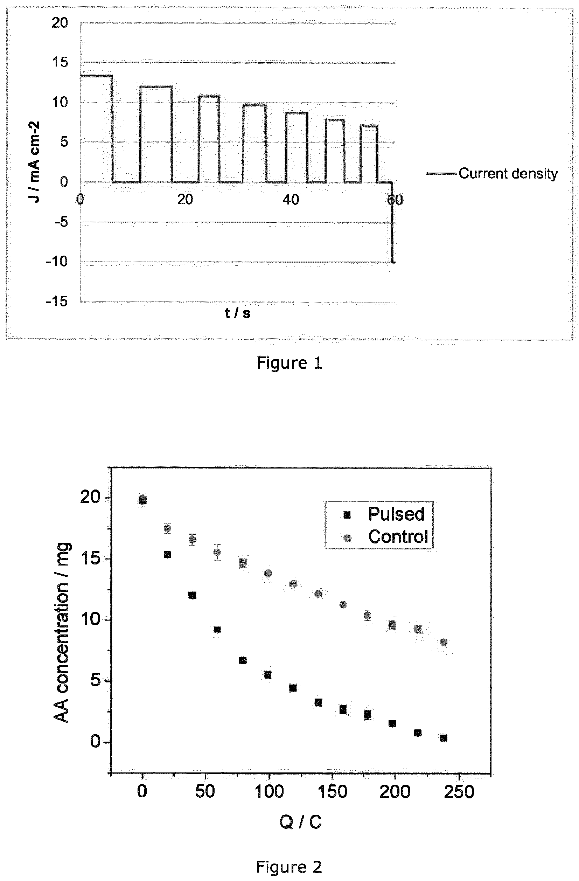

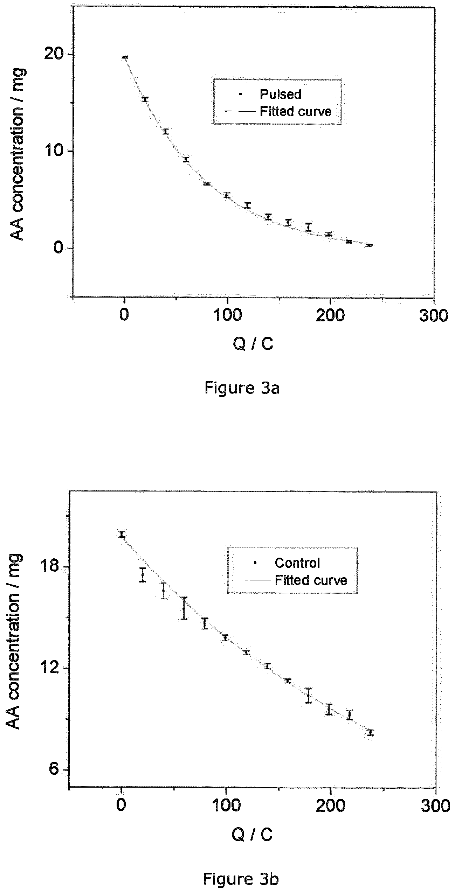

The figure 2 shows comparison of concentration of AA in the effluent during each 19.6 C of charged applied to the system for both pulsed cleaning and control. It is observed that the reduction of concentration of AA is exponentially decaying for both set of trials. Figures 3a and 3b show the exponential fit of both pulsed and control trials. The equation of fit for pulsed and control trials are y = -0.4 + 20.2 e ^{-x/78.9}, R² = 99.94 % and y = -0.7 + 20.4 e ^{-x/292.9}, R² =99.63 % respectively.

The total energy spent for the oxidation of AA is 28 kWh. For the same amount of energy, using the pulsed cleaning 98 % of AA was oxidation, whereas only 59% of AA was oxidised in the control trial. Table 1 shows the difference in percentage reduction of AA for each of the trial.

**Table 1: Comparison of pulsed trails and control in oxidating ascorbic acid in effluent.**

| Example 3 trials | Percentage reduction of AA | Energy consumed (Wh) | Energy consumption for 100% oxidation (Wh) |
|---|---|---|---|
| Pulsed (invention) | 98% | 28 | 36 |
| Control | 59% | 28 | 119 |

As per the fitting parameters, the total energy required to oxidise AA completely using the process according to the invention is 36 kWh whereas that of control is 119 kWh. The process according to the invention consumes about 3.3 times less energy.

### Example 4: Oxidation of paracetamol using BDD electrodes

20 mg of paracetamol was dissolved in one litre of water and was circulated through the electrolytic cell with a flow rate of 600 m³.h⁻¹. BDD was used as working and counter electrodes for electrochemical oxidation of paracetamol and a three-electrode setup (as mention in example 2) was used for quantifying paracetamol.

The oxidation was performed according to example 1.

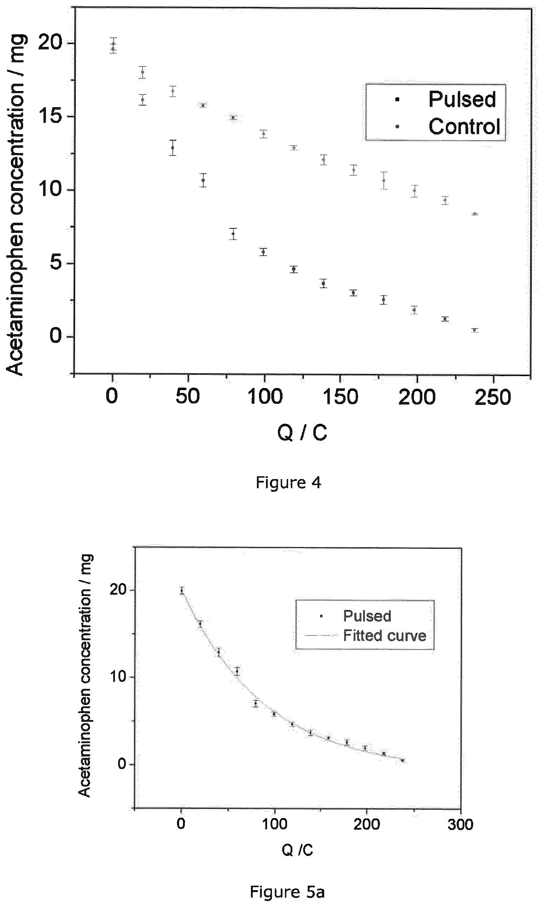

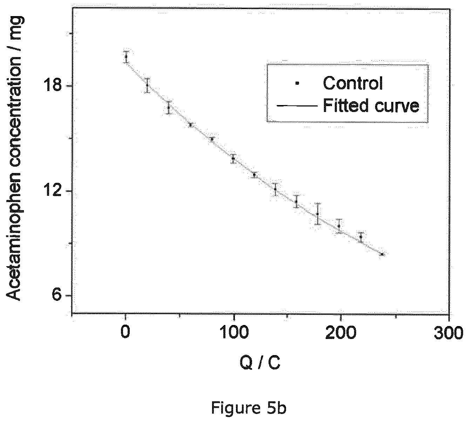

The figure 4 shows comparison of concentration of paracetamol in the effluent during each 19.6 C of charged applied to the system for both pulsed cleaning and control. It is observed that the reduction of concentration of paracetamol is exponentially decaying for both set of trials. Figure 5 shows the exponential fit of both pulsed and control trials. The equation of fit for pulsed and control trials are y = -0.6 + 20.7 e ^{-x/88.8}, R² = 99.45 % and y = -2.3 + 21.6 e ^{-x/339.7} R² = 99.92 % respectively.

The figures 5a and 5b show comparison of concentration of paracetamol in the effluent during each 19.6 C of charged applied to the system for both pulsed cleaning and control. It is observed that the reduction of concentration of paracetamol is of exponentially decaying for both set of trials. Table 2 shows comparison of oxidation of paracetamol for both cases.

**Table 2: Comparison of pulsed trails and control in oxidising paracetamol in effluent.**

| Example 4 trials | Percentage reduction of paracetamol | Energy consumed (Wh) | Energy consumption for 100% oxidation (Wh) |
|---|---|---|---|
| Pulsed (invention) | 97 % | 25 | 33 |
| Control | 57 % | 25 | 82 |

As per the fitting data, the total energy required to oxidise paracetamol completely using the process according to the invention is 33 kWh whereas that of control is 82 kWh. The process according to the invention consumes about 2.5 times less energy.

### Example 5: Oxidation of ascorbic acid using different electrode combinations

20 mg of AA was dissolved in one litre of water and was circulated through the electrolytic cell with a flow rate of 600 m³.h⁻¹. BDD was used as working and counter electrodes for electrochemical oxidation of AA and a three-electrode setup (as mention in example 2) was used for quantifying AA. The total amount of charged transferred is 99 C for both pulsed and control trials.

The experiment was repeated using TiO₂ as working and counter electrode, as well as using stainless steel. Table 3 shows the percentage reduction in AA concentration when a charge of 99 C was transferred to the system. This experiment elaborated that the pulsed cleaning is applicable also to other electrodes.

**Table 3: Concentration of AA before and after transfer of 99 C of charge for both pulsed and control trials.**

| Electrode | Cleaning | Before | After | % difference |
|---|---|---|---|---|
| BDD | Pulsed (invention) | 19.73 ± 0.06 | 5.53 ± 0.25 | 72% |
| BDD | Control | 19.93 ± 0.15 | 13.87 ± 0.12 | 30 % |
| Stainless steal | Pulsed (invention) | 19.73 ± 0.12 | 16.80 ± 0.46 | 15 % |
| Stainless steal | Control | 20.06 ± 0.21 | 18.60 ± 0.44 | 7 % |
| TiO₂ | Pulsed (invention) | 19.76 ± 0.31 | 14.03 ± 0.68 | 29 % |
| TiO₂ | Control | 20.03 ± 0.57 | 17.03 ± 0.32 | 15 % |

Electrochemical treatment being an energy-intense process despite attracting a great deal of attention due to the control simplicity, it has been demonstrated in the examples, the process of the invention allows to increase the energy efficiency of cleaning. Contrary to the other electrochemical techniques commonly reported in the literature, the process electrochemical cleaning according to the invention is minimum resource consuming and do not produce any chemical wastes.

## Claims

1. Process of electrochemical oxidation of a pollutant in an aqueous electrolyte using a multiple-electrode setup comprising at least a working electrode and at least a counter electrode and applying at least one train of current pulse, said train of current pulse comprises n pulses, n being an integer superior or equal to 2, n being identical or different from one train of current pulse to another,
wherein,
- each train of current pulse comprises positive pulses and may optionally comprise at least one negative pulse,
- each positive pulse has a different amplitude and/or duration,
- each positive pulse is followed by an off period of time during which the setup is turned off, preferably each off period of time during which the setup is turned off has a different duration,
- the trains of current pulse are identical or different.

2. Process according to claim 1 or 2, wherein the at least one train of current pulse is either descending, ascending or unsorted train of current pulse wherein:
o in a descending train of current pulse, the amplitude of the positive pulses decreases from one pulse to another in function of time, the duration of the positive pulses decreases from one pulse to another in function of time and/or the duration of the off periods of time between two positive pulses decreases from one off period to another in function of time,
o in an ascending train of current pulse, the amplitude of the positive pulses increases from one pulse to another in function of time, the duration of the positive pulses increases from one pulse to another in function of time and/or the duration of the off periods of time between two positive pulses increases from one off period to another in function of time,
o in an unsorted train of current pulse, the amplitude of the positive pulses increases or decreases from one pulse to another in function of time, the duration of the positive pulses increases or decreases from one pulse to another in function of time and/or the duration of the off periods of time between two positive pulses increases or decreases from one off period to another in function of time.

3. Process according to claim 1, wherein in the at least one train of current pulse the amplitude of the positive pulses increases or decreases by 5 to 30 %, preferably by 5 to 20 % and more preferably by 5 to 15 % from one pulse to another in function of time.

4. Process according to claim 1, wherein in the at least one train of current pulse the duration of the positive pulses increases or decreases by 5 to 30 %, preferably by 5 to 20 % and more preferably by 5 to 15 % from one pulse to another in function of time.

5. Process according to claim 1, wherein in the at least one train of current pulse the duration of the off periods of time between two positive pulses increases or decreases by 5 to 30 %, preferably by 5 to 20 % and more preferably by 5 to 15 % from one off period to another in function of time.

6. Process according to claim 1, wherein in the at least one train of current pulse, the amplitude of the first positive pulse is comprised between 1 and 50 mA.cm⁻², preferably between 5 and 25 mA.cm⁻² and more preferably between 10 and 20 mA.cm⁻² and the amplitude of pulses is defined such as the amplitude of a positive pulse m is equal to 70 to 95 % preferably 80 to 95 and more preferably 85 to 95 of the amplitude of a positive pulse m-1, m being an integer and 1 ≤ m ≤ n.

7. Process according to claim 1, wherein in the at least one train of current pulse, the duration of the first positive pulse is comprised between 1 and 600 seconds, preferably between 2 and 20 seconds, more preferably between 3 and 10 seconds and the duration of positive pulses is defined such as the duration of a positive pulse m is equal to 70 to 95 % preferably 80 to 95 and more preferably 85 to 95 of the duration of a positive pulse m-1, m being an integer and 1 ≤ m ≤ n.

8. Process according to claim 1, wherein in the at least one train of current pulse, the duration of the first off period of time is comprised between between 1 and 600 seconds, preferably between 2 and 20 seconds, more preferably between 3 and 10 seconds and the duration of the off periods of time is defined such as the duration of the off period of time p is equal to 70 to 95 % preferably 80 to 95 % and more preferably 85 to 95 % of the the off period of time p-1, p being an integer and 1 ≤ p ≤ n.

9. Process according to claim 1, wherein the duration of each train of current pulse is comprised between 30 and 5000 seconds, preferably between 40 and 200 seconds and more preferably between 50 and 100 seconds.

10. Process according to claim 1, wherein each train of current pulse comprises a negative pulse, preferably the negative pulse is the last pulse of each train of current pulse, the amplitude of the negative pulse is comprised between 1 and 50 mA.cm⁻², preferably between 5 and 30 mA.cm⁻² and more preferably between 5 and 15 mA.cm⁻² and the duration of the negative pulse is comprised between 0.01 and 50 s, preferably between 0.1 and 10 sand more preferably between 0.02 and 1 s.

11. Process according to claim 1, wherein the pulses shape is periodic or aperiodic, preferably periodic and of triangle, square, sinusoidal, saw tooth or wave shape and more preferably periodic and of square shape.

12. Process according to claim 1, wherein the number n of pulses of the at least one train of current pulse is comprised between 2 and 10000, preferably between 2 and 1000, more preferably between 2 and 100 and in a favoured embodiment between 2 and 20.

13. Process according to the preceeding claim, wherein the working electrode is chosen from the group comprising boron doped diamond, diamond like carbon, graphite, Ti, TiO₂, Pt, Pb, PbO₂, SnO₂, their alloys or combination of these materials electrodes, preferably the working electrode is a boron doped diamond electrode, and the counter electrode is chosen from the group comprising boron doped diamond, stainless steel, platinum, Ti, TiO₂, Au, their alloys or of combination of these materials electrodes, preferably the counter electrode is a boron doped diamond electrode.

14. Process according to claim 1, wherein the pollutant is an organic molecule, preferably chosen in the group comprising phenols, chlorophenols, nitrophenols, dyes, surfactants, oil, waste from pulp and paper industry, pathogens, pesticides, insecticides, herbicides, pharmaceutical wastes, micropollutants.

15. A clean water obtained according to the process of any preceeding claims, preferably said clean water contains less than 20 % of pollutant compared to the water before being cleaned, preferably less than 10 %.
